# FASCICULE DE BREVET EUROPEEN

(11) **EP 0 648 419 B1**
(45) Date de publication et mention de la délivrance du brevet: **06.05.1999**
(21) Numéro de dépôt: 94500164.2
(22) Date de dépôt: 05.10.1994
(51) Int. Cl.: A21B 1/26, F24C 15/32

(54) **Four à air à convection**
Umluftofen
Convection oven

(30) Priorité: 06.10.1993 ES 9302104; 10.02.1994 ES 9400249
(43) Date de publication de la demande: 19.04.1995
(73) Titulaire: Sanchez Sanchez, Francisca, E-08912 Badalona (Barcelona) (ES)
(72) Inventeur: Sanchez Sanchez, Francisca, E-08912 Badalona (Barcelona) (ES)
(74) Mandataire: Urizar Anasagasti, Jesus Maria

(56) Documents cités:
- EP-A- 0 002 784
- AT-B- 378 469
- DE-A- 3 727 228
- FR-A- 2 415 963
- FR-E- 92 009

## Description

La présente invention concerne un four à air à convection, selon la revendication 1.

Les fours à air à convection son déjà connus, mais ils présentent généralement une série de problèmes communs qui font que leur rendement soit faible et, ainsi, que la consommation d'énergie soit forte; ceci est dû au fait que l'utilisation de la chaleur générée dans les moyens de chauffage est déficitaire, pour plusieurs raisons.

L'un des problèmes qui interviennent dans l'utilisation déficitaire de l'énergie découle de la configuration de la chambre à cuisson, qui est composée généralement d'un réceptacle à base rectangulaire ou quadrangulaire, de manière qu'il existe des coins où l'air froid s'accumule, car l'air chaud circulant ne peut y accéder, et il est par conséquent difficile d'obtenir un chauffage uniforme de la chambre à cuisson et le temps utilisé pour le chauffage est élevé.

Un autre facteur intervenant dans l'utilisation déficitaire de la chaleur générée découle de la disposition des sorties de l'air circulant vers les moyens de chaleur; il est évident que l'air chaud tend à monter par sa propre nature; donc, si on aménage des sorties d'air chaud atteignant la hauteur totale de la chambre à cuisson, l'air chaud circulant n'est pas retenu à l'intérieur de la chambre pour mettre à profit sa chaleur, mais il sort rapidement vers les moyens de chauffage, avec une utilisation très basse de la chaleur.

Un autre problème que présentent d'une manière généralisée les fours à air à convection est l'émission à l'extérieur de vapeur, car au cours de certains stades de la cuisson il faut introduire de la vapeur à l'intérieur de la chambre, et celle-ci est conduite à l'extérieur par l'air chaud.

Le four à air à convection objet de ce brevet présente notamment comme nouveautés deux accès à la chambre à cuisson, aménagés sur deux faces opposées du four et, autour desquels, deux cadres périphériques d'où émergent des rideaux d'air chaud et à température ambiante, à l'intérieur et à l'extérieur respectivement.

Les deux cloisons de la chambre à cuisson présentent dans la zone centrale des cavités respectives qui pénètrent dans la base trapézoïdale, délimitées par des flancs convergeant vers la zone interne de celles-ci, qui configurent des moyens de guidage de l'air chaud, aussi bien à l'entrée qu'à la sortie de celui-ci à la chambre à cuisson, en éliminant les coins et l'accumulation d'air froid à l'intérieur de la chambre, ce qui contribue à une importante mise à profit de la chaleur et permet de réaliser un chauffage plus rapide que celle-là.

L'une des cloisons cache les moyens de chauffage, et sa superficie centrale pénétrant est composée dans sa zone supérieure par une chambre d'humidification, adossée aux moyens de chauffage, et au-dessous de laquelle elle présente un orifice d'entrée de l'air circulant vers les moyens de chauffage, de sorte que l'air chaud circulant est obligé de descendre avant d'être chauffé et impulsé de nouveau, en demeurant plus de temps à l'intérieur de la chambre et en assurant un rendement plus haut, avec une consommation énergétique d'environ 50% celle d'un four conventionnel.

L'air chaud passe à travers cet orifice inférieur vers les moyens de chauffage, du fait de la succion créée par les moyens d'impulsion disposés au-dessus de ceux du chauffage, et qui sont composés d'une seule turbine qui lance l'air, préalablement chauffé, à travers une conduite pont aménagée dans le toit du four, qui rejoint une cavité située derrière la cloison opposée de la chambre à cuisson.

Cette cloison opposée présente sur la surface centrale pénétrante une série de rainures verticales, à travers lesquelles l'air chaud sort et est projeté à l'intérieur de la chambre à cuisson, et près des entrées d'accès à la chambre à cuisson, elle présente deux autres sorties de largeur réglable, légèrement convergentes vers l'intérieure de celle-ci, à travers lesquelles émergent des courants périphériques d'air chaud.

La cloison de la chambre à cuisson la plus proche des moyens de chauffage présente, près des entrées de la chambre, des sorties verticales respectives de largeur réglable, qui communiquent avec la conduite pont supérieure à travers des ramifications de celle-ci, l'air chaud définissant, en sortant à travers celles-ci, des courants d'air chaud qui agissent sur les flancs du courant principal qui provient de l'autre cloison et qui circule en sens inverse, en le guidant, en collaboration avec la succion créée par les moyens d'impulsion, vers l'orifice d'entrée aux moyens de chauffage disposés dans la zone centrale inférieure de cette cloison.

Avec une telle disposition, les sorties par lesquelles accède l'air chaud à la chambre à cuisson, en créant un courant principal de cuisson, se trouvent en face de l'entrée d'air vers les moyens de chauffage, aménagée dans la cloison opposée, ce courant principal se déplaçant équidistant des deux entrées du four, en évitant son influence sur les courants périphériques d'air chaud créés, dans le flanc intérieur des accès à la chambre.

D'autre part, il est prévu que toutes les sorties d'air chaud incorporent des moyens pour le réglage de leur largeur, ce qui permet de réduire les moyens d'impulsion de l'air chaud à une seule turbine, et de varier indépendamment la vitesse de chacun des courants d'air générés dans celles-là.

Toutes les sorties d'air chaud, aménagées verticalement, incorporent un flanc fixe et un flanc amovible, ce qui permet de réaliser la réglage de la largeur de chacune d'elle de manière indépendante; de plus, le flanc fixe aussi bien que le flanc amovible présentent sur toute leur longueur une ailette en saillie qui détermine la direction de l'air à sa sortie.

Les entrées du four présentent un cadre extérieur, avec des rainures verticales opposées et réglables en largeur comme celles de l'air chaud, à travers lesquelles émerge de l'air à température ambiante, impulsé par les turbines respectives, définissant à la sortie de ces rainures des rideaux d'air respectifs.

Le four incorpore dans ses entrées des plaques de protection transparentes, qui sont situées de préférence entre les sorties périphériques d'air chaud et les sorties d'air à température ambiante, auquel cas ces dernières sont légèrement orientées vers l'intérieur du four, la surface extérieure des plaques balayant l'air à température ambiante, ce qui évite qu'une partie de l'air à température ambiante pénètre à l'intérieur de la chambre à cuisson, en baissant la température de celui-ci et, d'autre part, que les plaques de protection se réchauffent jusqu'à atteindre de hautes températures.

Ces plaques de protection peuvent être disposées en option sur le flanc extérieur des sorties d'air à température ambiante, ces dernières étant alors orientées légèrement vers l'extérieur, le flanc intérieur de celles-là balayant alors l'air à température ambiante.

Ce four est contrôlé par un tableau électrique de contrôle qui provoque automatiquement l'arrêt de la turbine d'impulsion d'air chaud, pendant un temps prédéterminé, immédiatement après la formation de vapeur dans la chambre d'humidification, de sorte que les particules de vapeur se déposent par leur propre poids à l'intérieur de la chambre, en n'étant plus en suspension, ce qui évite qu'elles soient transportées par l'air chaud circulant, et diminue presque totalement l'émission de vapeurs à l'extérieur.

Pour mieux comprendre l'objet de la présente invention, sur le plan en annexe est représentée une réalisation préférentielle d'un four à air à convection comme celui que l'on préconise ici. Sur ce plan:

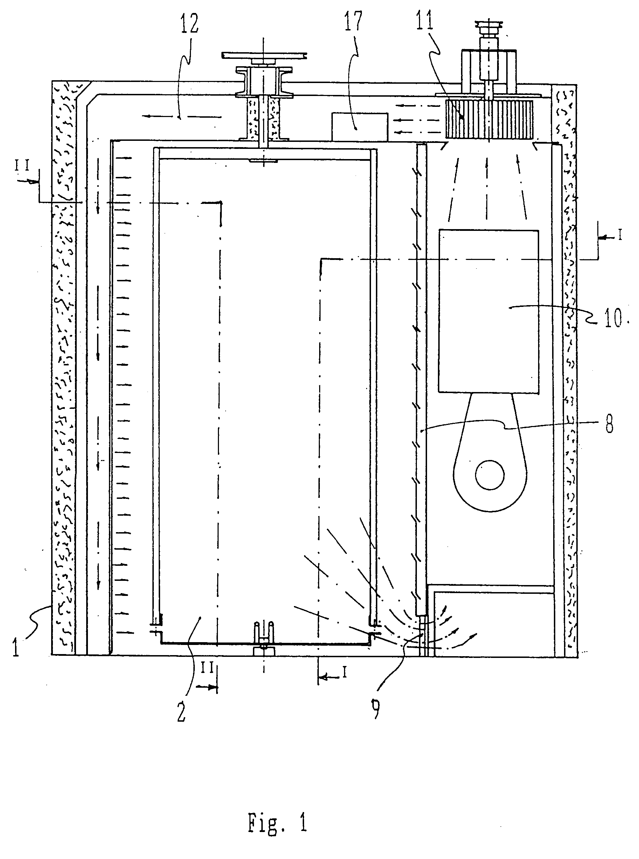

- La figure 1 montre une vue en hauteur, sectionnée par un plan vertical du four à air à convection.

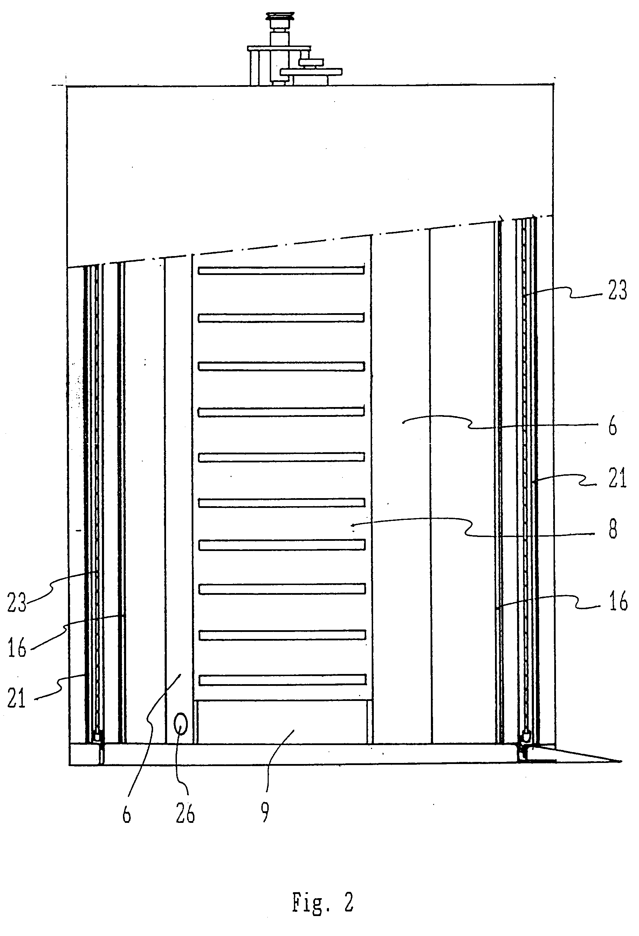

- La figure 2 montre une vue de profil du four, d'où l'on a éliminé une partie inférieure de l'un des flancs, au moyen de la section I.

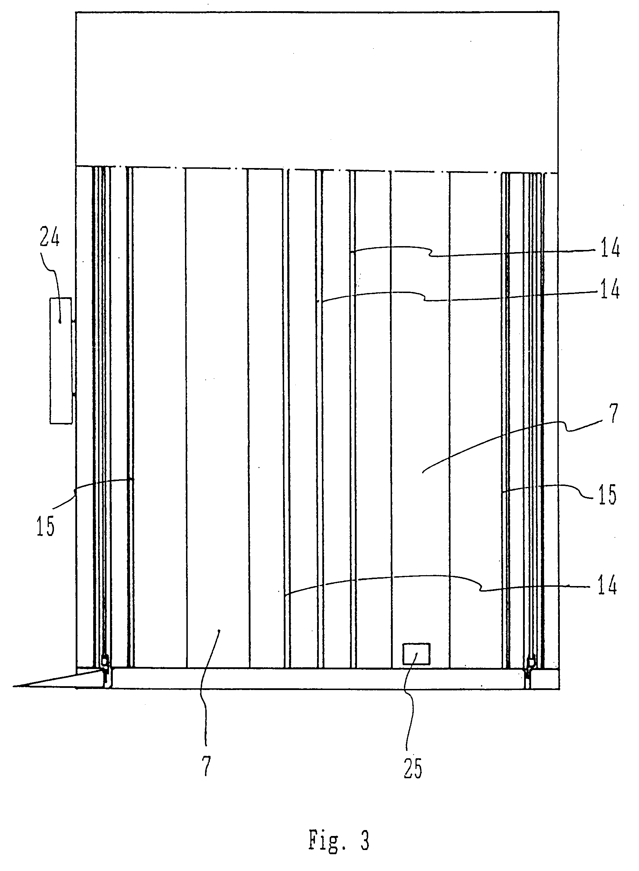

- La figure 3 montre une vue de profil du four, d' où l'on a éliminé une partie inférieure du flanc opposé au moyen de la section II.
- La figure 4 montre une vue de dessus du four, sectionné à mi hauteur par un plan horizontal, où se trouve représentée la circulation du flux d'air chaud à l'intérieur de la chambre.

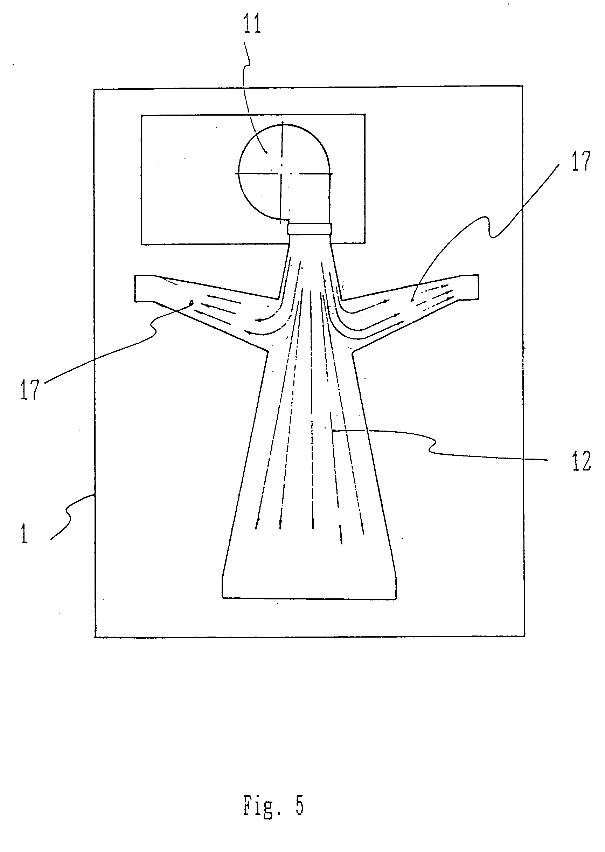

- La figure 5 montre un vue du dessus supérieur du four, où l'on peut observer la conduite pont de circulation d'air chaud, accouplée à l'hélice de la turbine.

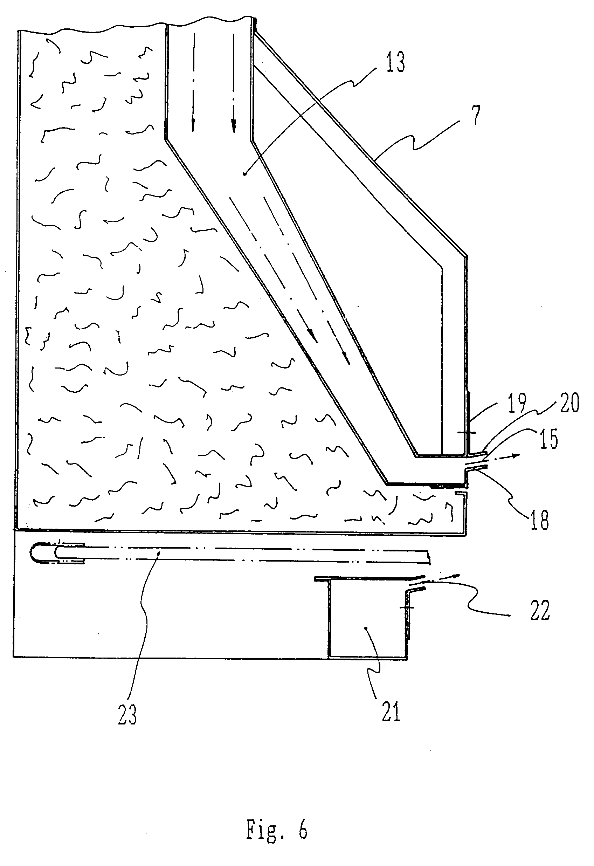

- La figure 6 montre un détail de dessus de l'un des coins du four, sectionné par un plan horizontal, où l'on peut observer les moyens de réglage des sorties d'air.

Comme on peut observer sur les figures de référence, le four à air à convection présente une carcasse (1) de configuration prismatique, qui définit intérieurement une chambre à cuisson (2) délimitée par deux entrées opposées (3) et par deux cloisons (4) et (5), opposées elles aussi.

Les cloisons (4) et (5) présentent respectivement au milieu des entrants prismatiques de base trapézoïdale, délimités respectivement par les chanfreins (6) et (7) qui éliminent les coins, dans le but d'empêcher l'immobilisation de l'air froid à l'intérieur de celles-ci.

La zone centrale de la cloison (4), qui pénètre et est délimitée par les chanfreins (6), est formée dans sa zone supérieure par une chambre d'humidification (8) et dans la zone inférieure, au-dessous de celle-là, elle présente un orifice (9) par lequel passe l'air chaud circulant dans la chambre à cuisson (2) vers les moyens de chauffage, composés par une chaudière (10) disposée dans la zone postérieure de la cloison (4), à laquelle est adossée la chambre d'humidification (8).

Au dessus de la chaudière (10), sur le toit du four, est située une turbine (11), qui constitue les moyens d'impulsion de l'air chaud, ayant pour mission d'aspirer l'air chaud de la chambre à cuisson (2), qu'elle extrait de celle-ci à travers la sortie (9) et de le lancer à travers une conduite pont (12) une fois réchauffé, à son passage par la chaudière (10).

La conduite pont (12) passe par le toit du four vers l'autre flanc, où elle s'accouple avec la cavité creuse (13), disposée derrière la cloison (5) et qui couvre pratiquement toute la largeur du four.

Cette cloison (5) présente sur la surface centrale pénétrante et délimitée latéralement par les chanfreins (7), plusieurs sorties (14) disposées verticalement, par lesquelles émerge l'air chaud de la cavité creuse (13), impulsé par la turbine (11), en créant un courant principal d'air chaud. La cloison (5) présente sur les deux flancs, à la confluence des entrées (3), des sorties verticales respectives (15) à travers lesquelles émerge de l'air chaud de la cavité creuse (13); ces sorties définissent des courants périphériques, légèrement convergents vers la zone intérieure de la chambre à cuisson, qui délimitent la zone de circulation du courant principal d'air chaud, en le conduisant, avec la collaboration des chanfreins (6) et (7), vers la zone centrale de la cloison opposée (4), pour qu'il soit aspiré de nouveau par la turbine (11), en sortant de la chambre à cuisson à travers l'orifice (9).

La cloison (4) présente également, près de l'un des flancs des entrées (3), des sorties verticales respectives (16) qui sont liées à des conduites (17) constituées par des ramifications respectives de la conduite pont (12), à travers lesquelles émergent des courants périphériques d'air chaud, légèrement convergents vers la zone intérieure de la chambre à cuisson.

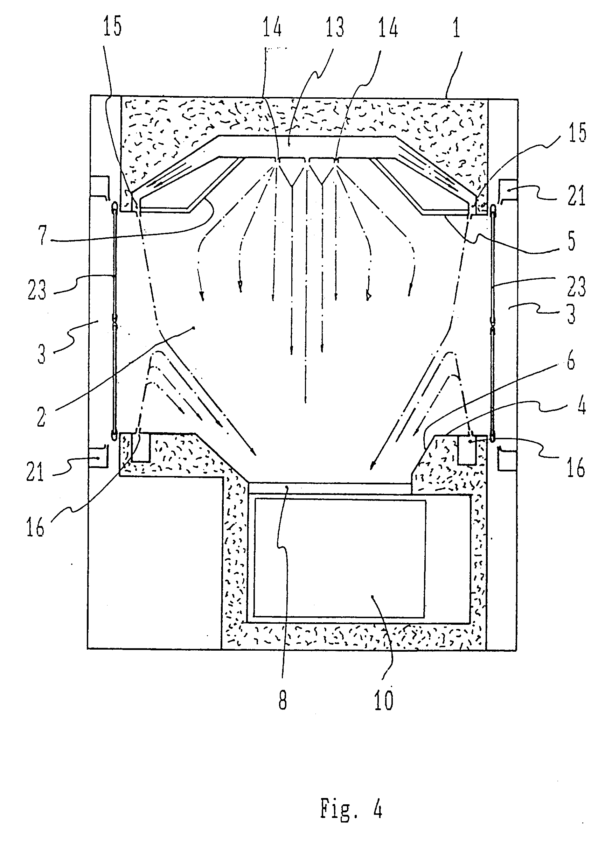

Les courants périphériques d'air chaud, qui émergent à travers les sorties (16), font un parcours court et reviennent ultérieurement dans la zone centrale de la cloison (4), à cause de la succion de la turbine (11), collaborant au guidage des courants périphériques vers la zone centrale de la cloison (4); ce flux peut être observé dans la figure 4, où l'on a représenté au moyen de flèches la circulation d'air chaud à l'intérieur de la chambre.

Pour obtenir une bonne conduite de l'air chaud à l'intérieur de la chambre à cuisson, il est prévu que toutes les sorties (14), (15) et (16), par lesquelles l'air chaud accède à la chambre à cuisson (2), incorporent des moyens de réglage de largeur indépendants; par conséquent, toutes les sorties incorporent un flanc fixe (18) et un flanc amovible, composé d'une platine (19), qui permet de varier la largeur des sorties, en variant la vitesse de sortie des courants correspondants, aussi bien le flanc fixe que le flanc amovible présentent une ailette (20) de direction du flux.

Les entrées (3) de la chambre à cuisson incorporent extérieurement un cadre périphérique (21) qui présente dans les tronçons verticaux une sortie (22) qui atteint toute la hauteur de celui-là; à travers ces ouvertures (22) l'air à température ambiante émerge, qui est recueilli de l'ambiance extérieure et lancé vers chacun des cadres (21) par la turbine correspondante, disposée au-dessus de chacun d'eux.

Les sorties (22) d'air à température ambiante incorporent des moyens de régulation de largeur, analogues à ceux des sorties d'air chaud, incorporant des ailettes de direction du flux, orientées légèrement vers l'intérieur de la chambre à cuisson (2).

La chambre à cuisson (2) est délimitée par les entrées (3) au moyen de plaques de protection (23), transparentes, disposées de préférence entre les courants périphériques intérieurs d'air chaud et les courants extérieurs de température ambiante. Les rideaux d'air à température ambiante ont pour but d'empêcher l'échauffement des plaques de protection (23).

Le fonctionnement du four est contrôlé par un panneau de contrôle (24), disposé extérieurement, qui provoque électroniquement et de manière automatique, l'arrêt de la turbine pendant un temps prédéterminé, immédiatement après l'introduction de vapeur à l'intérieur de la chambre au moyen de la chambre d'humidification (8), de sorte que les particules de vapeur se déposent à l'intérieur du four, en réduisant de manière totale l'émission de vapeurs à l'extérieur.

Ce four incorpore, comme d'habitude, une sortie (25) de décompression naturelle et une sortie (26) de tirage forcé.

## Revendications

1. Four à air à convection comprenant une carcasse à base polygonale, de préférence rectangulaire, qui configure intérieurement une cavité constituant la chambre de cuisson (2), pourvue d'un plateau tournant, et incorpore des moyens de chauffage et d'impulsion d'air chaud circulant dans son intérieur, dans lequel la chambre de cuisson (2), ouverte sur deux de ses faces opposées (3), est définie par deux cloisons opposées (4)-(5), qui présentent une zone centrale avancée vers l'extérieur du four à base trapézoidale, délimitées par des chanfreins (6,7) convergents vers le centre de la paroi respective, qui configurent une cavité (2) sans coins; une desdites cloison (4) présente des orifices (9) d'entrée d'air environnant vers les moyens de chauffage (10) où il est chauffé et lancé par les moyens d'impulsion vers une conduite pont (12), située sur le toit de la chambre (2), laquelle communique avec une cavité (13) située derrière la cloison (5), en face de la cloison antérieure (4), qui présente dans son milieu une série de rainures verticales (14) de largeur réglable, à travers lesquelles l'air chaud sort; de telle manière que l'air chauffé et lancé derrière la cloison (4), est conduit à travers le pont (12) à la cavité (13) située en regard des moyens de chauffage (10), en étant obligé de traverser de bout en bout la chambre de cuisson (2) de la cloison (5) à la cloison (4), en se distribuant de façon uniforme à l'intérieur de celle-ci, et évitant la production de zones d'accumulation de l'air froid en son sein.

2. Four, selon la revendication précédente, caractérisé en ce que la cavité (13), située derrière la cloison la plus éloignée des moyens de chauffage (10) présente également des sorties verticales (15) respectives de largeur réglable, près des entrées d'accès (3) à la chambre à cuisson (2), légèrement convergentes vers l'intérieur de celle-ci, à travers lesquelles émergent des courants périphériques d'air chaud.

3. Four, selon les revendications précédentes, caractérisé en ce que les entrées d'accès (3) a la chambre à cuisson (2), sur le flanc le plus proche des moyens de chauffage, présentent des sorties verticales (16) respectives de largeur réglable, a travers lesquelles émerge de l'air chaud provenant des ramifications (17) respectives de la conduite pont supérieure (12), qui définissent à leur sortie des courants d'air chaud qui délimitent le courant principal qui circule en sens inverse, en le guidant, en collaboration avec la succion créée par les moyens d'impulsion, vers l'orifice d'entrée (9) aux moyens de chauffage.

4. Four, selon les revendications précédentes, caractérisé en ce que toutes les sorties d'air chaud (14)-(15)-(16), disposées verticalement, sont définies par un flanc fixe (18) ayant une ailette en saillie (19), et un flanc amovible ayant une ailette parallèle a la précédente, dans le but de permettre, de manière indépendante, le réglage de largeur de chacune des sorties.

5. Four, selon les revendications précédentes, caractérisé en ce que les moyens d'impulsion de l'air chaud sont composés d'une turbine unique située au-dessus des moyens de chauffage (10), qui aspire l'air chaud et le lance à travers la conduite pont (12).

6. Four, selon les revendications précédentes, caractérisé en ce que la zone centrale de la cloison (4) la plus proche des moyens de chauffage (10) est composée dans sa zone supérieure par une chambre d'humidification (8), adossée aux moyens de chauffage, et dans la zone inférieure elle présente un orifice (9) d'entrée d'air vers les moyens de chauffage.

7. Four, selon les revendications précédentes, caractérisé en ce qu'il incorpore extérieurement un tableau électrique de contrôle (24) qui provoque automatiquement l'arrêt de la turbine (11) d'impulsion d'air chaud, pendant un temps prédéterminé, une fois effectuée la vaporisation de la chambre à cuisson au moyen de la chambre d'humidification (8), empêchant l'émission de vapeur à l'extérieur.

8. Four, selon les revendications précédentes, caractérisé en ce que les accès (3) à la chambre à cuisson (2) présentent un cadre extérieur (21), ouvert par des rainures verticales (22) opposées, associés à des moyens respectifs d'impulsion d'air à température ambiante, qui forme en sortant à travers ces rainures des rideaux d'air respectifs, légèrement convergents vers la zone intérieure (2) du four et qui tombent sur des plaques de protection transparentes (23), placées à chaque entrée (3) de la chambre à cuisson, entre les sorties périphériques intérieures d'air chaud (15)-(16) et les sorties de température ambiante extérieures (21).

9. Four, selon les revendications 1 à 7, caractérisé en ce que les entrées d'accès (3) à la chambre à cuisson (2) sont délimitées par des plaques de protection extérieures (23), sur lesquelles se dirigent depuis l'intérieur des rideaux respectifs d'air à température ambiante, qui émergent à travers des sorties verticales définies autour de chacun des accès de la chambre.

10. Four, selon les revendications 8 et 9, caractérisé en ce que les sorties d'air à température ambiante (21) définissent des moyens de régulation d'amplitude, similaires à ceux des sorties d'air chaud.

## Claims

1. A preferably rectangular air convection oven consisting of a housing with a polygonal base internally forming a cavity which is the cooking chamber (2), provided with a rotating plate equipped with means of heating and impelling hot air which circulates in its interior. Said cooking chamber (2) is open in two of its opposite faces (3), defined by two opposite walls (4)-(5), having a central area with a trapezoidal base projecting towards the outside of the oven and limited by some chamfers (6,7) converging towards the center of the pertinent wall, forming a cavity (2) without corners. One of the mentioned walls (4), has some holes (9) for the intake of air towards the heating means (10) in which it is heated and projected through the impelling means towards a conduction bridge (12) on the chamber (2) ceiling and communicating with a cavity (13) located behind the wall (5), opposite the rear wall (4) having a series of vertical grooves (14) in its center of adjustable width, through which the hot air flows, such that the hot air is projected behind the wall (4), led across the bridge (12) to the cavity (13) in front of some heating means (10) and obliged to cross the cooking chamber (2), from end to end, from wall (5) to wall (4), being uniformly distributed in said chamber and preventing the formation of accumulation areas of cold air in its interior.

2. An oven, according to the previous claim, characterized in that the cavity (13) behind the wall furthest from the heating means (10), likewise has some vertical outlets (15) of adjustable width, near to the accesses (3) to the cooking chamber (2), slightly converging towards the interior of the latter, through which some peripheral hot air currents emerge.

3. An oven, according to the previous claims, characterized in that the accesses (3) to the cooking chamber (2), on the side nearest to the heating means, has some vertical outlets (16), of adjustable width, through which hot air emerges, coming from the respective branches (17) of the upper conduction bridge (12), defining at its exit some hot air currents limiting the main current circulating in an opposite direction, by guiding it together with the aspiration created by the impelling means, towards the inlet hole (9) of the heating means.

4. An oven, according to the previous claims, characterized in that all the hot air outlets (14)-(15)-(16), distributed vertically, are defined by a fixed flank (18) provided with an overhanging fin (19) and an unmovable flank provided with a fin parallel to the previous one, to independently permit the width adjustment of each outlet.

5. An oven, according to the previous claims, characterized in that the hot air impulsion means consist of a single turbine located on top of the heating means (10), sucking the hot air and projecting it across the conduction bridge (12).

6. An oven, according to the previous claims, characterized in that the middle area of the wall (7) closest to the heating means (10) has in its upper area, a humidification chamber (8) attached to the heating means, with a hole (9) in the lower area, for the entrance of air towards the heating means.

7. An oven, according to the previous claims, characterized in that it includes externally, an electric control panel (24), automatically triggering the hot air impulsion turbine (11) to stop for a pre-determined time, once vaporization of the cooking chamber has been completed by means of the humidification chamber (8), preventing the emission of vapor outside.

8. An oven, according to the previous claims, characterized in that the accesses (3) to the cooking chamber (2), have an external frame (21), open by opposite vertical grooves (22), related to respective room temperature air impulsion means, which on leaving these grooves, form respective curtains of air, slightly converging towards the inside (2) of the oven and impinging over some transparent protection plates (23), located in each entrance (3) of the cooking chamber, between the interior peripheral hot air exits (15)-(16) and the external room temperature outlets (21).

9. An oven, according to claims 1 to 7, characterized in that the accesses (3) to the cooking chamber (2) are delimited by external protection plates (23), over which, directed from the interior, some curtains of air at room temperature, emerging through the vertical accesses defined around each one of the accesses to the chamber.

10. An oven, according to claims 8 and 9, characterized in that the room temperature air exits (21), define some amplitude adjustment means, similar to those of the hot air exits.

## Patentansprüche

1. Konvektionsofen, mit einem Gehäuse, das einen vieleckigen, vorzugsweise rechteckigen Grundriss aufweist und das im Inneren einen Hohlraum bildet, der die Brennkammer (2) darstellt, welche mit einem drehbaren Teller versehen ist und Heiz- und Antriebsmittel für die in ihrem Inneren umlaufende Heissluft umfasst, bei dem die Brennkammer (2), die auf zwei gegenüberliegenden Seiten (3) offen ist, durch zwei gegenüberliegende Wände (4) - (5) gebildet wird, die einen mittleren Bereich mit einem trapezförmigen Grundriss aufweisen, der bis zum Aussenbereich des Ofens reicht, wobei diese Wände durch Schrägungen (6, 7) begrenzt sind, die in der Mitte der jeweiligen Wand zusammenlaufen und so einen Hohlraum (2) ohne Ecken bilden; eine der genannten Wände (4) weist Öffnungen (9) für den Eintritt von Umgebungsluft zu den Heizmitteln (10) auf, in denen diese erwärmt wird und durch die Antriebsmittel zu einer Brückenführung (12) getrieben wird, wobei letztere auf der Decke der Kammer (2) liegt und eine Verbindung zu einem hinter der Wand (5), gegenüber der vorgenannten Wand (4), gelegenen Hohraum (13) herstellt, der in seiner Mitte eine Reihe von senkrechten Schlitzen (14) mit einstellbarer Breite aufweist, durch die die Heissluft austritt, und zwar so, dass die erhitzte und hinter die Wand (4) getriebene Luft durch die Brücke (12) zum Hohlraum (13) geführt wird, der gegenüber einer Anzahl von Heizmitteln (10) gelegen ist, und zwangsläufig die Brennkammer (2) vollständig, von der Wand (5) zu der Wand (4), durchquert, wobei sich die Hitze so gleichmässig im Inneren dieser Kammer verteilt und die Bildung von Bereichen mit einer Ansammlung von Kaltluft vermieden wird.

2. Ofen nach dem vorhergehenden Anspruch, dadurch gekennzeichnet, dass der Hohlraum (13), der hinter der weiter von den Heizmitteln (10) entfernten Wand liegt, ebenso entsprechende senkrechte Ausgänge (15) mit einstellbarer Breite aufweist, in der Nähe der Zugänge (3) zu der Brennkammer (2), die leicht zum Inneren dieser Kammer zusammenlaufen, und über die umlaufende Heissluftströme austreten.

3. Ofen nach den vorhergehenden Ansprüchen, dadurch gekennzeichnet, dass die Zugänge (3) zur Brennkammer (2) über der den Heizmitteln am nächsten liegenden Flanke jeweils senkrechte Ausgänge (16) mit einstellbarer Breite aufweisen, über die Heissluft austritt, die aus den jeweiligen Abzweigungen (17) der oberen Brückenleitung (12) stammen, die an ihrem Ausgang Heissluftströme erzeugen, die den in die entgegengesetzte Richtung gehenden Hauptstrom begrenzen, und ihn in Zusammenwirkung mit dem durch die Antriebsmitteln gebildeten Sog zur Eingangsöffnung (9) der Heizmittel führen.

4. Ofen nach den vorhergehenden Ansprüchen, dadurch gekennzeichnet, dass die senkrecht angeordneten Heissluftausgänge (14) - (15) - (16) durch eine feste Flanke (18), die mit einer vorstehenden Rippe (19) versehen ist, und durch eine bewegliche Flanke, die mit einer Rippe versehen ist, welche parallel zur vorgenannten Rippe angeordnet ist, gebildet werden, um so die Einstellung der Breite jedes einzelnen Ausgangs unabhängig von den anderen zu ermöglichen.

5. Ofen nach den vorhergehenden Anprüchen, dadurch gekennzeichnet, dass die Antriebsmittel der Heissluft aus einer einzigen Turbine bestehen, die über den Heizmitteln (10) angeordnet ist, die Heissluft ansaugt und über die Brückenleitung (12) antreibt.

6. Ofen nach den vorhergehenden Ansprüchen, dadurch gekennzeichnet, dass im mittleren Bereich der den Heizmitteln (10) näher gelegenen Wand (7), im oberen Bereich derselben, eine Befeuchtungskammer (8) vorgesehen ist, die an den Heizmitteln anliegt, und die an ihrem unteren Bereich eine Öffnung (9) für den Eintritt der Luft zu den Heizmitteln aufweist.

7. Ofen nach den vorhergehenden Ansprüchen, dadurch gekennzeichnet, dass er aussen eine elektrische Kontrollschalttafel (24) aufweist, die automatisch einen eine bestimmte Zeit andauernden Stillstand der Turbine (11) für die Umwälzung der Heissluft bewirkt, nachdem die Dampfeinleitung in die Brennkammer durch die Befeuchtungskammer (8) durchgeführt wurde, um so den Austritt des Dampfs nach aussen zu verhindern.

8. Ofen nach den vorhergehenden Ansprüchen, dadurch gekennzeichnet, dass die Zugänge (3) zur Brennkammer (2) einen äusseren Rahmen (21) aufweisen, der durch gegenüberliegende senkrechte Schlitze (22) geöffnet ist, welchen entsprechende Mittel zur Umwälzung von Luft auf Raumtemperatur zugeordnet sind, wobei diese bei Austritt durch diese Schlitze entsprechende Luftvorhänge bildet, die leicht zusammenlaufen in Richtung des Innenbereichs (2) des Ofens, und die auf durchsichtige Schutzplatten (23) auftreffen, die an jedem Eintritt (3) der Brennkammer angeordnet sind, zwischen den inneren umlaufenden Heissluftausgängen (15) - (16) und den äusseren Ausgängen (21) für die Luft auf Raumtemperatur.

9. Ofen nach den Ansprüchen 1 bis 7, dadurch gekennzeichnet, dass die Zugänge (3) zur Brennkammer (2) durch äussere Schutzplatten (23) begrenzt sind, auf die vom Inneren entsprechende Luftvorhänge auf Raumtemperatur gerichtet werden, die durch die senkrechten Austritte austreten, welche neben allen Zugängen der Kammer gebildet sind.

10. Ofen nach den Ansprüchen 8 und 9, dadurch gekennzeichnet, dass die Ausgänge (21) für die Luft auf Raumtemperatur Einstellmittel für die Breite bilden, die ähnlich ausgebildet sind wie die der Heissluftausgänge.
